Europäisches Patentamt

European Patent Office

Office européen des brevets

(11) Publication number: **0 368 436**
**A2**

## (12) EUROPEAN PATENT APPLICATION

(21) Application number: **89304479.2**

(22) Date of filing: **04.05.89**

(51) Int. Cl.⁵: **G01N 21/47, G01N 21/01, A61B 5/00**

(30) Priority: **08.11.88 GB 8826104**

(43) Date of publication of application:
**16.05.90 Bulletin 90/20**

(84) Designated Contracting States:
**DE GB**

(71) Applicant: **HAMAMATSU PHOTONICS K.K.**
**1126-1 Ichino-cho Hamamatsu-shi**
**Shizuoka-ken(JP)**

(72) Inventor: **Van der Zee, Piet of Univ. Coll. London Dept. Med.**
**Physics and Bio-Eng. 1st Floor Shropshire House**
**11-20 Capper Street London WC1E 6JA(GB)**
Inventor: **Delpy, David T. of Univ. Coll. London Dept. Med.**
**Physics and Bio-Eng. 1st Floor Shropshire House**
**11-20 Capper Street London WC1E 6JA(GB)**
Inventor: **Arridge, Simon of Univ. Coll. London Dept. Med.**
**Physics and Bio-Eng. 1st Floor Shropshire House**
**11-20 Capper Street London WC1E 6JA(GB)**

(74) Representative: **Rackham, Stephen Neil et al**
**GILL JENNINGS & EVERY 53-64 Chancery Lane**
**London WC2A 1HN(GB)**

(54) **Phantom having similar optical characteristics to living tissues.**

(57) A phantom having similar light scattering characteristics to living tissues of interest is obtained by suspending in a selected medium (2) a mixture of particles (3) of different-valued radius $r_k$ at respective values of concentration $C_k$ which are determined on the basis of the following matrix equation:

$$
\begin{bmatrix} P_{meas}(\theta_1) \\ \vdots \\ P_{meas}(\theta_i) \\ \vdots \\ P_{meas}(\theta_n) \end{bmatrix}
=
\begin{bmatrix} P(\theta_1,r_1) \cdots\cdots P(\theta_1,r_m) \\ \vdots \quad P(\theta_i,r_k) \quad \vdots \\ P(\theta_n,r_1) \cdots\cdots P(\theta_n,r_m) \end{bmatrix}
\begin{bmatrix} C_1 \\ \vdots \\ C_k \\ \vdots \\ C_m \end{bmatrix}
$$

where $P_{meas}(\theta_i)$ is a scattering intensity of light with the living tissues at a scattering angle $\theta_i$ and $P(\theta_i,r_k)$ is a scattering intensity with the particles having the radius $r_k$ at the scattering angle $\theta_i$.

# PHANTOM HAVING SIMILAR OPTICAL CHARACTERISTICS TO LIVING TISSUES

The present invention relates to a phantom having optical characteristics, in particular light-scattering characteristics, that are similar to those of living tissues.

Cerebral hemorrhage and inadequate supply of oxygen to brain cells have been either the primary cause of the death of newborn babies in an ICU (Intensive Care Unit) or one of the causes that make them handicapped throughout their life. Bleeding in the brain can be readily discovered by ultrasonic diagnosis or by other imaging techniques. However, hypoxia of brain cells, as with cysts in porencephalic patients and other deficiencies of brain tissues, cannot be detected until after about 3 weeks have passed since the occurrence of the damage. Hypoxia in the brain cells of newborn babies has even become a social concern for medical institutions in developed countries. In Great Britain, intranatal deaths resulting from asphyxia account for one third of the causes of natal death. In other words, three out of 1,000 newborn babies die of suffocation and at least an equal number of babies who survive will be handicapped on account of asphyxia.

Under these medical and social circumstances, a need has arisen for the development of a diagnostic apparatus that allows direct measurement of oxygen supply to brain cells. Tissues and bones of human bodies exhibit a fairly good transparency to light in the near infrared region. Furthermore, in this wavelength range, hemoglobin and cytochrome which are vectors of oxygen transport through the body undergo a change in their absorption spectra depending upon whether they are oxidized or reduced. Therefore, the change in the amount of oxygen supply to the brain can be detected by irradiating the head with near infrared light in the wavelength range of 700 - 900 nm and measuring the change in the spectrum of light that has been transmitted through the head.

Various diagnostic devices have so far been proposed on the basis of the principle described above and their operation consists essentially of guiding light from a near infrared laser diode to the head via fiber optics and detecting the transmitted light from the head (see, for example, U.S. Patent Nos. 4,223,680 and 4,281,645). These devices are adapted to measure the overall (average) change in the quantity of oxygen in the brain. Techniques for determining the distribution of oxygen in the brain have also been investigated and some of them are discussed in "Bioinstrumentation Using Light -- Roads to Optical CT" in O plus E, May 1987 to April 1988.

One of the prerequisites for the development of devices of the type described above is the use of a phantom, or a volume of material that has optical characteristics (absorption and scattering) equivalent to those of brain tissues, and this phantom is required to be stable and to ensure reproducible results.

An oil-in-water emulsion has been conventionally used as a phantom but this is not highly stable and suffers the disadvantage of experiencing a change in particle size with time. A further problem is that the particles in the emulsion often become too small to realize optical characteristics similar to those of living tissues of interest.

According to the present invention, a phantom has similar optical characteristics to living tissues with respect to light-scattering characteristics such as the scattering distribution and has a structure that in a selected medium is suspended a mixture of particles of different-valued radius $r_k$ (k is a positive integer of 1 to m) at respective values of concentration $C_k$ which are determined on the basis of the following matrix equation:

$$\begin{pmatrix} P_{meas}(\theta_1) \\ \vdots \\ P_{meas}(\theta_i) \\ \vdots \\ P_{meas}(\theta_n) \end{pmatrix} = \begin{pmatrix} P(\theta_1,r_1) \cdots\cdots P(\theta_1,r_m) \\ \ddots \\ P(\theta_i,r_k) \\ \ddots \\ P(\theta_n,r_1) \cdots\cdots P(\theta_n,r_m) \end{pmatrix} \begin{pmatrix} C_1 \\ \vdots \\ C_k \\ \vdots \\ C_m \end{pmatrix}$$

where $P_{meas}(\theta_i)$ is a scattering intensity with the living tissues at a scattering angle of $\theta_i$ (i is a positive integer of 1 to n) and $P(\theta_i,r_k))$ is a scattering intensity with a particle having the radius $r_k$).

According to the present invention, a phantom having similar optical characteristics to living tissues of interest can be produced by merely incorporating different-sized particles in a medium. Particularly high stability and reproducibility can be realised by selecting particles whose specific gravity is generally the same as that of the medium (this may be achieved by mixing polystyrene particles with water for example).

Examples of phantoms in accordance with this invention will now be described with reference to the accompanying drawings in which:-

Fig. 1 shows how to determine a distribution of light scattering on the basis of measured data;

Fig. 2 shows specific procedures of forming a phantom;

Fig. 3 is a graph showing the scattering characteristics of a phantom composed of two kinds of polystyrene particles; and,

Fig. 4 and 5 are diagrams illustrating two typical uses of the phantom of the present invention.

A phantom of the present invention is prepared by suspending different-sized particles in a medium. The particles to be suspended desirably have a specific gravity that is generally the same as that of the medium. This condition may be satisfied by suspending polystyrene particles in water. The wavelength range in which optical characteristics of interest are to be measured is desirably that of near infrared radiation (e.g. 700 - 900 nm) and the absorption of light by polystyrene particles is negligible in this wavelength range.

The phantom of the present invention is formed by suspending a mixture of particles, say, polystyrene particles, of different-valued radius $r_k$ (k is a positive integer of 1 to m) at respective values of concentration $C_k$ in a selected medium, say, water. The respective values of $C_k$ are determined as follows. If the measured scattering distribution with living tissues at a scattering angle of $\theta_i$ (i is a positive integer of 1 to n) is written as $P_{meas}(\theta_i)$ and if the calculated or measured scattering distribution with polystyrene particles having the radius $r_k$ is written as $P(\theta_i, r_k)$, then the concentration, $C_k$, of polystyrene particles having a specific value of radius $r_k$ can be determined on the basis of the following matrix equation:

$$
\begin{bmatrix}
P_{meas}(\theta_1) \\
\vdots \\
P_{meas}(\theta_i) \\
\vdots \\
P_{meas}(\theta_n)
\end{bmatrix}
=
\begin{bmatrix}
P(\theta_1, r_1) \cdots\cdots\cdots P(\theta_1, r_m) \\
\vdots \ddots \vdots \\
\vdots \quad P(\theta_i, r_k) \quad \vdots \\
\vdots \ddots \vdots \\
P(\theta_n, r_1) \cdots\cdots\cdots P(\theta_n, r_m)
\end{bmatrix}
\begin{bmatrix}
C_1 \\
\vdots \\
C_k \\
\vdots \\
C_m
\end{bmatrix}
\cdots (1)
$$

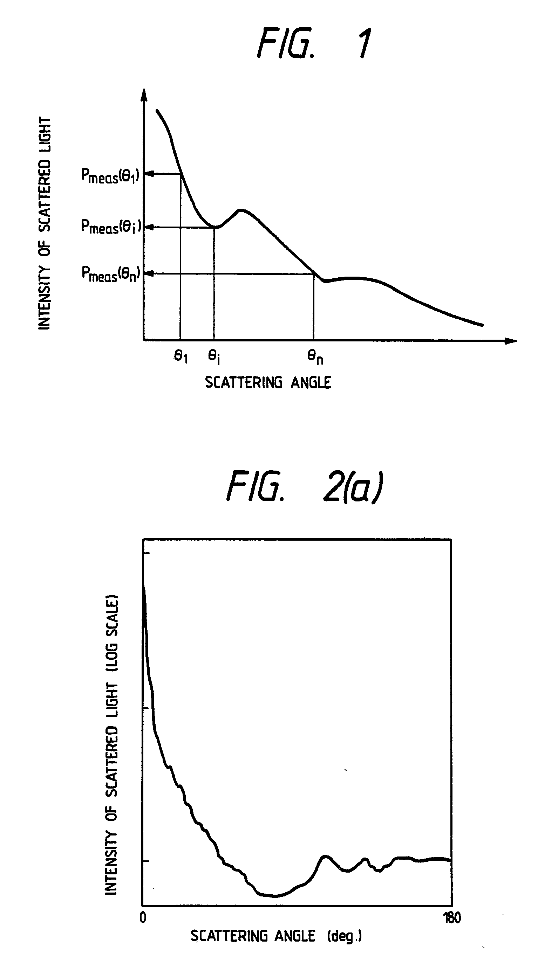

The scattering distribution, $P_{meas}(\theta_i)$, given on the left side of equation (1) can be obtained by measuring the scattering characteristics of the tissues of a living organ such as the brain illuminated with incident light. If a profile as shown in Fig. 1 is obtained, which represents the dependence of the intensity of scattered light on the scattering angle, the intensities of scattered light at scattering angles $\theta_1$, $\theta_i$, and $\theta_n$ correspond to $P_{meas}(\theta_1)$, $P_{meas}(\theta_i)$ and $P_{meas}(\theta_n)$, respectively.

The scattering distribution, $P(\theta_i r_k)$, given in the first term of the right side of equation (1) is that of polystyrene particles having a radius of $r_k$. In general, $P(\theta, r_k)$ is calculated by known Mie theory of light scattering but it may also be determined by actual measurements. In this latter case, the scattering characteristics of polystyrene particles are measured for each value of the radius $r_k$ and $P(\theta, r_k)$ is determined from the obtained data.

On the basis of these measured and calculated values, operations are performed on the matrix equation (1) to determine the concentration of polystyrene particles, $C_k$, for each value of the radius $r_k$. Operations with the matrix equation (1) may be performed by the SVD (single value decomposition) method.

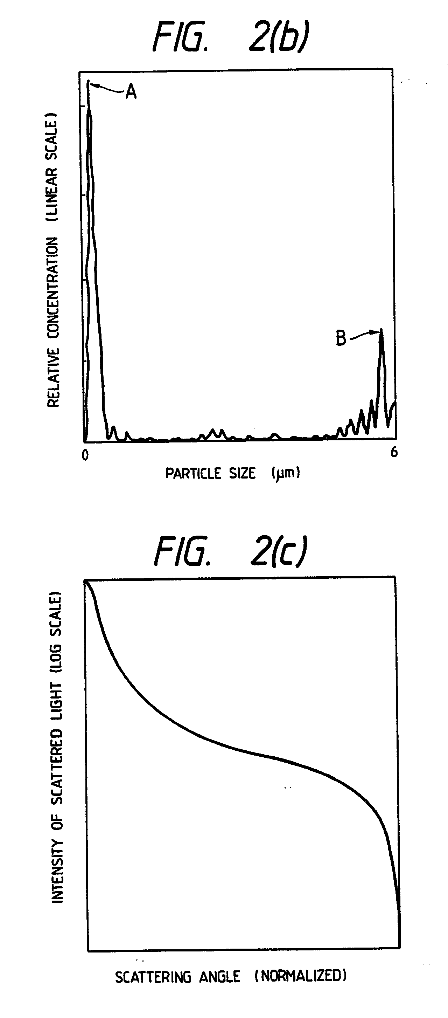

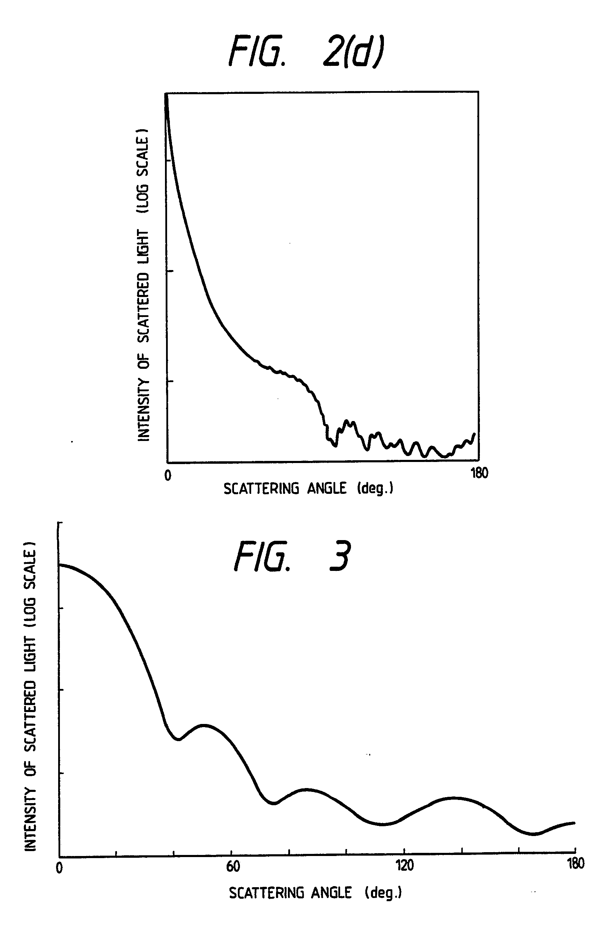

Specific procedures of forming the phantom described above are explained hereinafter with reference to Fig. 2.

First, living tissues of the brain are prepared as a sample and illuminated with near infrared light (783 nm) to investigate the characteristics of light scattering in the sample. The results are as shown graphically in Fig. 2(a), with the scattering angle ($\theta_i$) being plotted in degrees on the horizontal axis and the intensity of scattered light being plotted on a logarithmic scale on the vertical axis. This completes the step of determining experimentally the scattering distribution $P_{meas}(\theta i)$.

In the next step, the scattering distribution $P(\theta_i, r_k)$ is calculated by Mie theory of light scattering. On the basis of both the results of this calculation and the measured values shown in Fig. 2(a), the concentration of polystyrene particles, $C_k$, is calculated for each value of the radius $r_k$ by equation (1). As for the scattering angle $\theta_i$, this calculation is performed over the range of 0-180° with 1° increments, and as for the radius $r_k$, calculation is carried out over the range of 0 - 0.6 μm with 0.04 μm increments. The results are as shown graphically in Fig. 2(b), with the horizontal axis plotting the radius of polystyrene particles, $r_k$, and the vertical axis plotting relative concentration (on a linear scale). One can readily see the presence of two peaks in the graph as denoted by A and B.

The scattering distribution, $P(\theta_i, r_k)$, as determined by Mie theory of light scattering is shown graphically in Fig. 2(c) with the scattering angle plotted on the horizontal axis. The horizontal axis of the graph shown in Fig. 2(c) corresponds to the scattering angle and has been normalized in accordance with the SVD method.

When polystyrene particles were suspended in water at respective values of the concentration $C_k$ determined for each value of the radius $r_k$ (see Fig. 2(b)), a phantom was obtained that had light-scattering characteristics similar to those of the living tissues. In other words, when the intensity of scattered light was calculated on the basis of the data of concentration $C_k$ shown in Fig. 2(b) for each value of the radius $r_k$, results as shown in Fig. 2(d) were obtained. One can readily see that the measured data for the actual living tissues which is shown in Fig. 2(a) is in good agreement with the calculated data for the phantom of the present invention which is shown in Fig. 2(d), and the agreement is particularly good at scattering angles in the range of 0 - 90°.

Ideally, the phantom of the present invention is composed of polystyrene particles having many different values of radius. In practice, however, it is difficult and economically infeasible to obtain polystyrene particles having many different values of radius and this necessitates a certain kind of approximation. Thus, noting the two peaks indicated by A and B in Fig. 2(b), one may form a phantom by mixing polystyrene particles having two different radii. Stated more specifically, polystyrene particles having a radius $r_1$ (= 0.025±0.001 $\mu$m) are mixed with polystyrene particles having a radius $r_2$ (= 0.5±0.015 $\mu$m). When these two types of polystyrene particles were suspended in water at respective concentrations of $C_1$ (= 6.7%) and C2 (= 2.5%), a phantom having the light-scattering characteristics shown in Fig. 3 was obtained. The mean scattering cosine, g, of this phantom was 0.899, which is in very good agreement with the value (g ≃ 0.9) for the actual living tissues.

The mean scattering cosine, g, is a parameter for the directivity of the scattering of particles and is expressed by:

$$g = \int_0^{180°} P(\theta) \cdot \cos\theta \cdot d\theta \qquad \cdots\cdots (2)$$

where $\theta$ is the scattering angle and $P(\theta)$ is the scattering intensity. In the case of complete forward scattering (the scattering angle $\theta$ is 0° for all particles), g = 1; in the case of complete isotropic scattering, g = 0; and in the case of complete backward scattering ($\theta$ = 180° for all particles), g = -1.

A modification of the embodiment described above is explained below. While the distribution of scattering intensity was discussed in the foregoing embodiment, there exists another parameter to described the light scattering, i.e., coefficient of scattering $\mu s$. The coefficient of scattering $\mu s$ is a parameter expressed by the reciprocal of the mean optical pathlength which light travels between successive scatterings, and is given by:

$$\mu_s = \sum_{k=1}^{m} C_k \cdot S_k \qquad \cdots\cdots (3)$$

where $r_k$ is the radius of a particle, $C_k$ is the concentration of particles having the radius $r_k$, and $S_k$ is the scattering cross section (as determined by Mie theory of light scattering) of the particles of the radius $r_k$. Therefore, if the relative concentration of particles is determined as shown in Fig. 2(b) by performing operations on the matrix equation (1), the absolute concentration of the particles that yield a predetermined coefficient of scattering $\mu_s$ can be determined.

Besides use in evaluating the performance of a certain diagnostic device, the phantom of the present invention has many other applications and three of them are briefly described below.

(1) Determining optical pathlengths in living tissues:

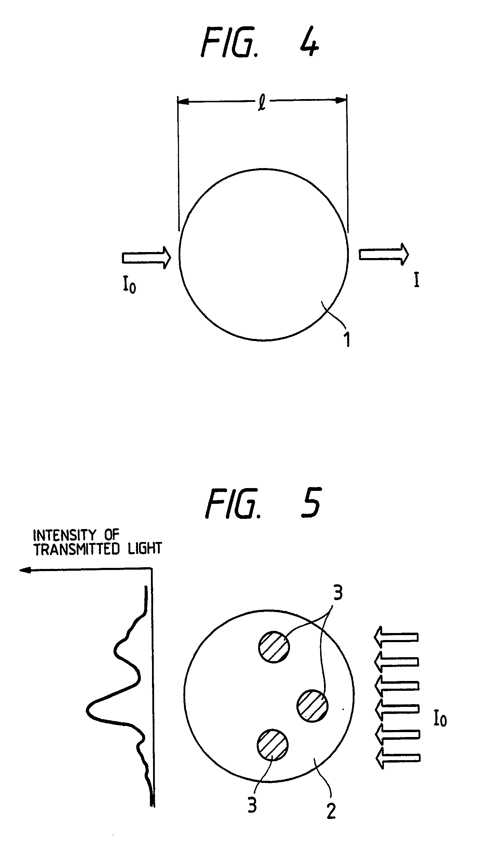

When one wants to measure the change in the quantity of oxygen in the brain, he has to determine the concentrations of hemoglobin, oxidized hemoglobin and other vectors of oxygen transport by measuring the change in light absorption at various wavelengths. In the absence of light scattering, the change in light absorption, $\Delta A$, will be expressed by equation (4) to be given below. When, as shown in Fig. 4, incident light $I_o$ is launched into the brain 1, producing transmitted light I, $\Delta A$ is given by:

$\Delta A = \ell \cdot \alpha \cdot \Delta C = \Delta\log(I/I_o)$ (4)

where $\ell$ is the length of optical path in the brain, $\alpha$ is the absorption coefficient of hemoglobin, and $\Delta C$ is

the change in oxygen concentration. Since I and $I_o$ are measurable values and $\alpha$ is known, the change in oxygen concentration $\Delta C$ can be determined by equation (4). However, in the presence of light scattering, the effective value of optical pathlength is increased (several times the value shown in Fig. 4), making it impossible to calculate $\Delta C$ by equation (4). If, in this case, an experiment is conducted using the phantom of the present invention which has similar optical characteristics to the living tissues, the effective value of $l$ can be determined, thereby allowing $\Delta C$ to be calculated by equation (4).

(2) Evaluation of imaging such as oxygen distribution:

In imaging a certain phenomenon such as oxygen distribution in living tissues, experimentation with a phantom and the evaluation of its results are indispensable. For this purpose, three light absorbers are contained in the phantom of the present invention as shown in Fig. 5, where the phantom is indicated by 2 and the light absorbers by 3, and the phantom 2 is illuminated with incident light $I_o$. By investigating the light transmitted through the phantom, the distribution of the intensity of transmitted light can be obtained in association with the light absorbers, and this allows exact evaluation of a diagnostic device of interest and precise diagnosis experiment, including, e.g., the evaluation of image resolution.

(3) Analysis of light distribution in living tissues:

In performing PDT (photodynamic therapy), it is essential to know the extent of light propagation through living tissues of interest. This information can be obtained in an easy and exact way by using the phantom of the present invention.

Various modifications are possible with the present invention. For instance, physiological saline may be used instead of water as a medium in which polystyrene particles are to be suspended. If a light-absorbing dye is added in a suitable amount, the absorption characteristics of the phantom can be adjusted independently of its scattering characteristics.

As described in detail on the foregoing pages, a phantom having similar optical characteristics to living tissues of interest can be produced in the present invention by merely incorporating different-sized particles in a medium. Particularly high stability and reproducibility can be realized by selecting particles whose specific gravity is generally the same as that of the medium (for instance, by suspending polystyrene particles in water).

**Claims**

1. A phantom having similar optical characteristics to living tissues with respect to light-scattering characteristics, comprising:
a selected medium (2); and,
a mixture of particles (3) suspended in said medium, of different-valued radius $r_k$ (k is a positive integer of 1 to m) at respective values of concentration $C_k$, wherein
said values of concentration $C_k$ are determined on the basis of the following matrix equation.

$$
\begin{bmatrix} P_{meas}(\theta_1) \\ \vdots \\ P_{meas}(\theta_i) \\ \vdots \\ P_{meas}(\theta_n) \end{bmatrix}
=
\begin{bmatrix} P(\theta_1,r_1) \cdots P(\theta_1,r_m) \\ \ddots \\ P(\theta_i,r_k) \\ \ddots \\ P(\theta_n,r_1) \cdots P(\theta_n,r_m) \end{bmatrix}
\begin{bmatrix} C_1 \\ \vdots \\ C_k \\ \vdots \\ C_m \end{bmatrix}
$$

where $P_{meas}(\theta_i)$ is a scattering intensity with said living tissues at a scattering angle $\theta_i$ (i is a positive integer of 1 to n) and $P(\theta_i,r_k)$ is a scattering intensity with said particles having said radius $r_k$ at said scattering angle $\theta_i$.

2. A phantom according to claim 1, wherein said values of concentration $C_k$ are determined further on the basis of the following equation:

$$\mu_S = \sum_{k=1}^{m} C_k S_k$$

where $\mu_s$ is a reciprocal of a mean optical pathlength and $S_k$ is a scattering cross-section of said particles of radius $r_k$.

3. A phantom according to claim 1 or 2, wherein said particles(3) have a specific gravity which is generally the same as that of said medium (2).

EP 0 368 436 A2

*FIG. 1*

*FIG. 2(a)*

FIG. 2(b)

FIG. 2(c)

# FIG. 2(d)

INTENSITY OF SCATTERED LIGHT (LOG SCALE)

0    SCATTERING ANGLE (deg.)    180

# FIG. 3

INTENSITY OF SCATTERED LIGHT (LOG SCALE)

0            60           120          180

SCATTERING ANGLE (deg.)

FIG. 4

FIG. 5

INTENSITY OF
TRANSMITTED LIGHT